# EUROPEAN PATENT SPECIFICATION

(11) **EP 2 541 166 B1**
(45) Date of publication and mention of the grant of the patent: **26.03.2014**
(21) Application number: 10846711.9
(22) Date of filing: 02.12.2010
(51) Int. Cl.: F25B 9/14, F16K 17/00

(54) **DISPLACER VALVE FOR A CRYOGENIC REFRIGERATOR**
VERDRÄNGUNGSVENTIL FÜR EINEN KRYOGENEN KÜHLTANK
VANNE DE PISTON DÉPLACEUR D'UN RÉFRIGÉRATEUR CRYOGÉNIQUE

(30) Priority: 24.02.2010 KR 20100016698
(43) Date of publication of application: 02.01.2013
(73) Proprietor: LG Electronics Inc., Seoul 150-721 (KR)
(72) Inventor: PARK, Song Oun, Changwon-si Gyeongsangnam-do 642-940 (KR); JUNG, Won Hyun, Changwon-si Gyeongsangnam-do 642-751 (KR)
(74) Representative: Boult Wade Tennant
(86) International application number: PCT/KR2010/008579
(87) International publication number: WO 2011/105684

(56) References cited:
- JP-A- 2000 088 384
- JP-A- 2000 088 384
- JP-A- 2003 329 325
- JP-A- 2005 164 225
- US-A- 4 305 741
- US-A1- 2006 137 339

## Description

### Technical Field

The present invention relates to a displacer valve assembly for a cryogenic refrigerator, which is formed in a thin-plate shape and fastened to a displacer cover by a bolt, and more particularly, to a displacer valve assembly which can be prevented from rotating around a bolt.

### Background Art

In general, a cryogenic refrigerator is a low-vibration high-reliability refrigerator which cools a micro electronic component, a superconductor, etc., wherein a working fluid such as helium, hydrogen, etc. generates a refrigeration output through a compression process, an expansion process, etc. A Stirling refrigerator, a GM refrigerator, and a Joule-Thomson refrigerator have been widely known as the representative cryogenic refrigerators. Such refrigerators have disadvantages in that reliability is reduced during the high-speed operation and that separate lubrication is required against abrasion of friction parts in the operation. There are thus increasing demands for a cryogenic refrigerator which can maintain reliability even in the high-speed operation and which needs not to be repaired for an extended period of time without separate lubrication. Recently, an oil-free cryogenic refrigerator has been used that reduces friction between components as a high-pressure working fluid serves as a kind of bearing.

The above-described cryogenic refrigerator is constructed in such a manner that, while a refrigerant is compressed in a compression space, pumped, radiated, regenerated, and expanded in an expansion space, it exchanges heat with the ambient air and maintains the ambient temperature in a cryogenic state. Here, a displacer interworks with a piston in the opposite direction to the linear reciprocating direction of the piston. The displacer includes a displacer rod, a displacer body having a 'U'-shaped section being provided at its end portion, and a displacer cover defining a given space in the displacer body. The displacer cover has a hole and a thin displacer valve for opening and closing the hole so that the refrigerant can flow into the displacer cover.

The conventional displacer valve for the cryogenic refrigerator is provided as a thin plate having a curved portion so that it can be easily opened and closed by a pressure difference. However, since the displacer valve is fixed by a bolt, it may easily rotate around the bolt, and thus its operational reliability may be degraded.

US 4,305,741 discloses a self-regulating cryogenic refrigerator comprising a displacer and refrigerant flow control means. JP 2000-088384 discloses a gas pressure driven cryogenic refrigerating machine formed by arranging a displacer and cold storage unit in a cylinder.

### Disclosure

### Technical Problem

The present invention has been made to solve the aforementioned problems in the prior art. An object of the present invention is to provide a displacer valve for a cryogenic refrigerator which does not rotate but is fixed in a proper position, even when the displacer valve is fastened to one surface of a displacer cover by a bolt.

### Technical Solution

The present inveniton provides a displacer valve assembly as set out in claim 1.

There is provided a displacer valve for a cryogenic refrigerator, which is mounted on one circular surface of a displacer cover by a bolt to open and close a hole formed in the surface of the displacer cover, the displacer valve including a rotation preventing guide fastened to an eccentric portion of the displacer cover by the bolt to prevent the displacer valve from rotating around the bolt.

There is provided a cryogenic refrigerator according to claim 5.

In addition, the cryogenic refrigerator may include: a fixed portion with a bolt hole which is fixed by the bolt; an opening/closing portion spaced apart from the fixed portion to open and close the hole of the displacer cover; a connection portion smoothly connecting the fixed portion to the opening/closing portion; and the rotation preventing guide extended from the fixed portion and supported on a lateral surface perpendicular to one surface of the displacer cover.

Moreover, the rotation preventing guide may be more extended in the circumferential direction toward the center of the circular surface than toward the center of the bolt hole.

Additionally, the rotation preventing guide may be formed in a curved-line shape along the lateral surface of the displacer cover.

Furthermore, the cryogenic refrigerator may further include a cutaway portion formed by cutting away a part of the fixed portion in a curved-line shape to maintain an interval between the connection portion and the rotation preventing guide and facilitate a movement of the connection portion.

### Advantageous Effects

With the displacer valve assembly for the cryogenic refrigerator according to the present invention that has the above construction, since the displacer valve is eccentrically fastened to the displacer cover by the bolt and the rotation preventing guide of a specific geometry is supported on the lateral surface perpendicular to one surface of the displacer cover, the displacer valve can be prevented from rotating around the bolt and located in a proper position. As a result, its operational reliability can be ensured.

### Description of Drawings

FIG. 1 is a side view of a cryogenic refrigerator according to a preferred embodiment of the present invention.
FIG. 2 is a side-sectional perspective view of the cryogenic refrigerator according to the preferred embodiment of the present invention.
FIG. 3 is a side sectional view of the cryogenic refrigerator according to the preferred embodiment of the present invention.
FIG. 4 is an exploded view of a displacer valve for a cryogenic refrigerator in a mounted state according to a preferred embodiment of the present invention.

### Best Mode for Carrying out Invention

Hereinafter, a preferred embodiment of the present invention will be described in detail with reference to the accompanying drawings.

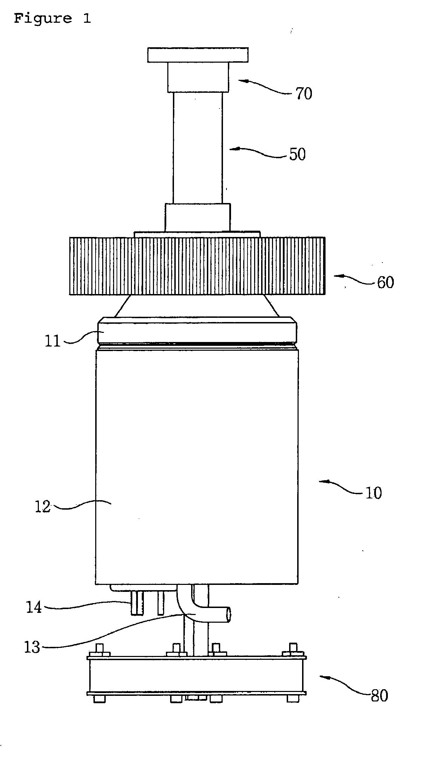

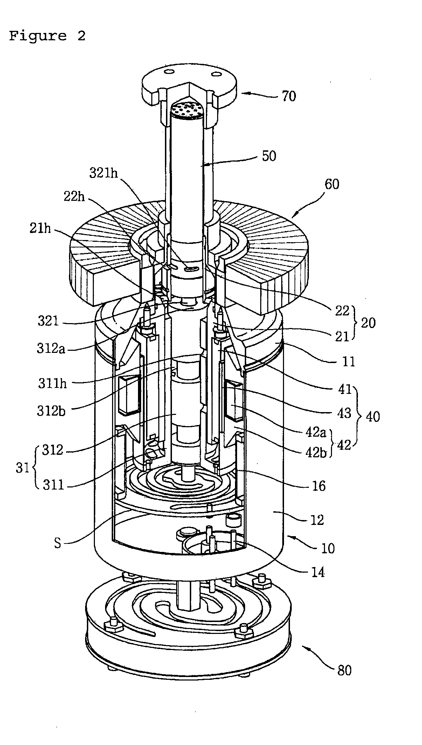

FIGS. 1 to 3 are views showing a cryogenic refrigerator according to an embodiment of the present invention.

As illustrated in FIGS. 1 to 3, the cryogenic refrigerator according to the embodiment of the present invention includes a case 10 forming the outer appearance, a fixed member 20 fixed in the case 10 and defining a given space, a movable member 30 linearly reciprocated in a compression space C of the fixed member 20 in the axial direction to compress and expand a refrigerant, a linear motor 40 provided between the case 10 and the fixed member 20 to drive the movable member 30, a regenerator 50 coupled to the movable member 30 in the axial direction to perform isochoric regeneration between refrigerants flowing in the opposite directions from each other, a radiation unit 60 mounted around the fixed member 20, the movable member 30, and the regenerator 50 to radiate heat of the compressed refrigerant to the outside, and a cooling unit 70 coupled to define an expansion space E in the axial direction of the regenerator 50 so that the expanded refrigerant can absorb external heat.

The case 10 includes a frame 11 concentric to the regenerator 50, the radiation unit 60, and the cooling unit 70 and a cylindrical shell tube 12 fixedly connected to the frame 11 in the axial direction. Preferably, the frame 11 and the shell tube 12 are connected by welding, so that a hermetic shell is defined therein. A portion of the frame 11, to which the fixed member 20 is fastened by a bolt, has a smaller diameter than the shell tube 12 but has a larger thickness. A portion of the frame 11, on which the radiation unit 60 is mounted, has a relatively small thickness so as to improve heat exchange efficiency. A pipe 13 for exhausting the air or injecting the refrigerant is provided on the shell tube 12. The pipe 13 exhausts the air so that a high-vacuum state can be generated in the case 10 and injects the refrigerant such as a pure He gas into the case 10. Additionally, a power terminal 14 is provided on the shell tube 12 to supply power for the linear motor 40.

The fixed member 20 includes a cylinder 21 fixed to the frame 11 and extended to the inside of the shell tube 12 and a displacer housing 22 expanded from the cylinder 21 to be engaged with the inside of the frame 11. The cylinder 21 and the displacer housing 22 are formed in a cylindrical shape with a step difference, the displacer housing 22 has a smaller diameter than the cylinder 21, and a connection portion expanded from the outer circumferential surface of the cylinder 21 is fixed to the frame 11 by a bolt. Here, the cylinder 21 and the displacer housing 22 define the compression space C therein to compress the refrigerant and have through holes 21 h and 22h communicating with a radiation space D in the radiation unit 60, respectively.

The movable member 30 includes a piston 31 driven by the linear motor 40 described later to be linearly reciprocated in the cylinder 21 and a displacer 32 interoperated with the linear reciprocation of the piston 31 according to the law of action and reaction to be linearly reciprocated in the displacer housing 22 in the opposite direction to the piston 31. The piston 31 is composed of a piston body 311 provided with a gap from the inner circumferential surface of the cylinder 21 and a piston plug 312 provided in the piston body 311. The displacer 32 is composed of a displacer rod 321 passing through the center of the piston plug 312 and supported by a leaf spring S fixed to the case 10 to be able to absorb shock and a displacer cover 322 received in or coupled to a displacer body 321 a in the axial direction, which is an end portion of the displacer rod 321 embedded in the displacer housing 22, and defining a given space so that the refrigerant can flow therein. The compression space C is defined between the piston 31 and the displacer body 321a. Here, the displacer body 321 a has a 'U'-shaped section and has first and second through holes 321 h and 321 H communicating with the inside of the radiation unit 60. The displacer cover 322 has a displacer valve 323 provided on an inlet port (not shown) communicating with the regenerator 50 to be opened and closed by a pressure difference and a through hole 322H communicating with the inside of the displacer body 321 a.

Meanwhile, since the movable member 30 is linearly reciprocated, a gas bearing which can lubricate components which are in friction with each other is used in addition to the leaf spring S. The gas bearing may be constructed as follows. A passage 312a is provided in the axial direction of the piston plug 312 and a plurality of storage grooves 312b are formed along the outer circumferential direction of the piston plug 312 in the circumferential direction to communicate with the passage 312a so that the refrigerant of the compression space C can be introduced thereinto, a plurality of holes 311 h are formed in the radial direction of the piston body 311 so that the refrigerant stored in the storage grooves 312b of the piston plug 312 can be supplied to the space between the piston body 311 and the cylinder 21, and a plurality of holes 312h are formed in the radial direction of the piston plug 312 so that the refrigerant stored in the storage grooves 312b of the piston plug 312 can be supplied to the space between the piston plug 312 and the displacer rod 321. Of course, various shapes of grooves (not shown) are formed in the outer circumferential surface of the piston plug 312 in the circumferential direction or the axial direction so that the refrigerant stored in the storage grooves 312b of the piston plug 312 can be guided to the holes 311 h of the piston body 311 or the holes 312h of the piston plug 312, and a piston valve (not shown) is provided between the compression space C and the storage grooves 312b so that the refrigerant can flow merely in one direction.

The linear motor 40 includes a cylindrical inner stator 41 fixed to contact the outer circumferential surface of the cylinder 21, a cylindrical outer stator 42 fixed to the inner circumferential surface of the shell tube 12 to maintain a certain interval from the outside of the inner stator 41, and a permanent magnet 43 connected to the piston body 311 to maintain a gap between the inner stator 41 and the outer stator 42. Of course, the outer stator 42 is provided in such a manner that a plurality of core blocks 422 are mounted on a coil winding body 421. The coil winding body 421 is connected to the power terminal 14 on the case 10 side. One end of the core block 422 of the outer stator 42 is supported by the frame 11, preferably, can be fixed to the frame 11 by welding, and the other end thereof is supported by a support 16. The support 16 is fixed to the outer circumference of the leaf spring S by a bolt. That is, one end of the outer stator 42 is supported by the frame 11, and the other end thereof is supported by the support 16 connected to the leaf spring S.

The regenerator 50 includes a cylindrical regeneration housing 51 coupled to the displacer housing 22, a thermal storage material 52 inserted into a part of the displacer body 321 a and the inside of the regeneration housing 51, and an end cap 53 attached to cover an end portion of the thermal storage material 52. The regenerator 50 is constructed in such a manner that the refrigerant can pass through the thermal storage material 52 and the end cap 53. As the thermal storage material 52 serves to exchange heat with the refrigerant gas and receive, store and return energy, it is preferably made of a material having a large heat exchange area and specific heat, low thermal conductivity, and uniform permeability. For example, the thermal storage material 52 may be formed in a fine thread ball shape.

The radiation unit 60 is composed of a cylindrical base 61 and plate-shaped fins 62 densely arranged on the base 61 in the circumferential direction and is made of a metal material having high heat transfer efficiency, such as copper, etc.

The cooling unit 70 is mounted on an end portion of the regenerator 50 to define the expansion space E with the end cap 53 and maintains a cryogenic temperature via the heat exchange operation. Of course, the cooling unit 70 may be provided with a larger surface area to facilitate the heat exchange operation between the indoor refrigerant and the outdoor air.

Moreover, reference numeral 80 denotes a passive balancer which may include a leaf spring to be able to reduce vibration of the hermetic shell during the operation of the cryogenic refrigerator.

The operation of the cryogenic refrigerator with the above construction will be described below.

First, when a current is supplied to the outer stator 42 through the power terminal 14, the mutual electromagnetic force is generated between the inner stator 41 and the outer stator 42 and the permanent magnet 43. This electromagnetic force makes the permanent magnet 43 linearly reciprocated. Here, as the permanent magnet 43 is connected to the piston body 311 and the piston plug 312 engaged therewith, the piston 31 is linearly reciprocated with the permanent magnet 43. As such, when the piston 31 is linearly reciprocated in the cylinder 21, the displacer 32 moves in the opposite direction to the motion of the piston 31 according to the law of action and reaction. At the same time, the displacer 32 is elastically supported by the leaf spring S, and thus linearly reciprocated in the opposite direction to the motion of the piston.

Accordingly, the refrigerant is compressed in the compression space C in the cylinder 21 by the linear reciprocation of the piston 31 and the displacer 32 in the opposite directions, transferred to the radiation space D in the frame 11 through the through holes 21 h of the cylinder 21, and radiated by the radiation unit 60, i.e., the refrigerant is subjected to an isothermal compression process. When the compression space C is compressed, the displacer body 321 a and the thermal storage material 52 of the regenerator 50 move together, so that a relatively negative pressure is produced in the expansion space E. Thus, the refrigerant subjected to the isothermal compression process flows into the thermal storage material 52 of the regenerator 50 through the through holes 22h of the displacer housing 22 and the first through holes 321 h of the displacer body 321 a and exchanges heat with the refrigerant flowing in the opposite direction, i.e., the refrigerant is subjected to an isochoric regeneration process. The refrigerant subjected to the isochoric regeneration process is transferred to and expanded in the expansion space E and cools the outdoor air in the cooling unit 70, i.e., the refrigerant is subjected to an isothermal expansion process. Thereafter, while the expansion space E is relatively compressed and the compression space C is relatively expanded, the refrigerant subjected to the isothermal expansion process is introduced into the regenerator 50 again and subjected to the isochoric regeneration process to be regenerated by the refrigerant flowing in the opposite direction as described above. Here, the refrigerant passes through the displacer body 321 a and the displacer cover 322 through the inlet port formed in the displacer cover 322 and the displacer valve 323, and then introduced again into the compression space C through the through holes 322H of the displacer cover 322 and the second through holes 321 H of the displacer body 321a. Of course, while the linear motor 40 is operated, the isothermal compression process, the isochoric regeneration process, the isothermal expansion process, and the isochoric regeneration process are sequentially repeated, so that the cryogenic refrigeration is performed in the cooling unit 70.

In the meantime, as set forth herein, as the piston 31 constituting the movable member 30 and the displacer 32 are linearly reciprocated in the opposite directions to each other according to the law of action and reaction and the effect of the leaf spring supporting the displacer 32, the volume of the compression space C is repeatedly decreased and increased, so that the refrigerant of the compression space C flows both in the direction of the regenerator 50 and the opposite direction and serves as a gas bearing for lubricating the components which are in sliding contact with each other. Specifically, the refrigerant flowing from the compression space C to the regenerator 50 through the radiation space D operates as the gas bearing between the displacer housing 22 and the displacer body 321 a, and the refrigerant flowing from the compression space C to the storage grooves 312b through the passage 312a provided in the piston plug 312 in the axial direction operates as the gas bearing between the piston body 311 and the cylinder 21 through the holes 311 h formed in the piston body 311 in the radial direction and also operates as the gas bearing between the piston plug 312 and the displacer rod 321 through the holes 312h formed in the piston plug 312 in the radial direction.

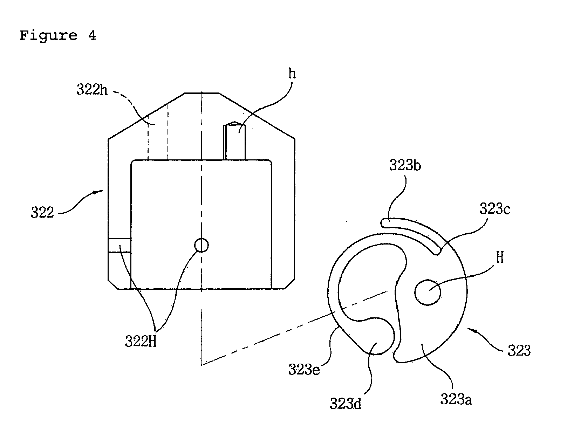

FIG. 4 is an exploded view of a displacer valve for a cryogenic refrigerator in a mounted state according to a preferred embodiment of the present invention.

As described above, in the cryogenic refrigerator according to the present invention, a given space is defined in a displacer body 321 a and a displacer cover 322. A refrigerant passing through a regenerator 50 passes through the given space, before flowing into a compression space C again. Therefore, as illustrated in FIG. 4, the displacer cover 322 has an inlet port 322h through which the refrigerant flows, and the displacer valve 323 is mounted on one surface of the displacer cover 322 in which the inlet port 322h is formed.

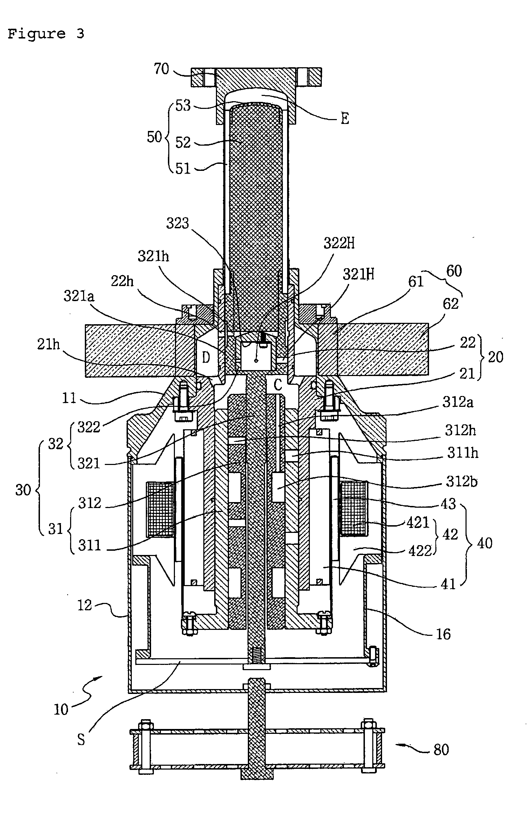

The displacer cover 322, which has a 'U'-shaped section, is fitted into a displacer body 321a (see FIG. 3) having a 'U'-shaped section as explained above. Here, the inlet port 322h through which the refrigerant flows in is formed in one blocked circular surface of the displacer cover 322, and a bolt groove h to which the displacer valve 323 can be fastened is formed therein. The inlet port 322h and the bolt groove h are positioned eccentrically from the center of the surface of the displacer cover 322. In addition, through holes 322H through which the refrigerant flows out are formed in a cylindrical lateral surface of the displacer cover 322. Of course, the lateral surface is perpendicular to the one surface of the displacer cover 322.

The displacer valve 323 is formed in a thin-plate shape and composed of a fixed portion 323a having a bolt hole H fastened to the bolt groove h of the displacer cover 322 by the bolt, a rotation preventing guide 323b formed in a curved-line shape and extended from one side of the fixed portion 323a along the lateral surface of the displacer cover 322, a cutaway portion 323c formed in a curved-line shape like the rotation preventing guide 323b by cutting away the fixed portion 323a along the inside of the rotation preventing guide 323b, an opening/closing portion 323d formed in a disk shape and spaced apart from the fixed portion 323a to open and close the inlet port 322h of the displacer cover 322, and a connection portion 323e formed in a curved-line shape to connect the fixed member 323a to the opening/closing portion 323d. The bolt hole H of the fixed portion 323a is positioned eccentrically from the center of the surface of the displacer cover 322 like the bolt groove h of the displacer cover 322 as described above, and its outer edge is formed along the lateral surface of the displacer cover 322. The rotation preventing guide 323b, which is extended from one side of the fixed portion 323a, is extended along the lateral surface of the displacer cover 322 from the center of the bolt hole H of the fixed portion 323a to the center of the surface of the displacer cover 322, and its outer edge is also formed in a curved-line shape along the lateral surface of the displacer cover 322. The outer edges of the fixed portion 323a and the rotation preventing guide 323b are formed along at least half of the lateral surface of the displacer cover 322. When the cutaway portion 323c is formed on the fixed portion 323a, the rotation preventing guide 323b is formed outside the cutaway portion 323c and the connection portion 323e is formed inside the cutaway portion 323c. The curved portion and the cutaway portion 323c are formed in a curved-line shape with the same radius of curvature. The opening/closing portion 323d is formed in a disk shape with a diameter greater than the inlet port 322h. The connection portion 323e has a length increased by the cutaway portion 323c and has a relatively small width, so that the displacer valve 323 can be smoothly opened and closed by a given pressure. The connection portion 323e is formed in a curved-line shape such as a circular arc.

Hence, a process of coupling the displacer valve 323 to the displacer cover 322 will be described below. The fixed portion 323a and the rotation preventing guide 323b of the displacer valve 323 are seated along the lateral surface of the displacer cover 322, and the bolt hole H of the displacer valve 323 is aligned with the bolt groove h of the displacer cover 322 and fastened thereto by the bolt. Of course, the opening/closing portion 323d of the displacer valve 323 is disposed to cover the inlet port 322h of the displacer cover 322. Here, a force sufficient to move the displacer valve 323 on the surface of the displacer cover 322 may be applied to the displacer valve 323 by an external impact, etc. As the fixed portion 323a of the displacer valve 323 is eccentrically fixed to the surface of the displacer cover 322 and the fixed portion 323a and the rotation preventing guide 323b of the displacer valve 323 are supported on the lateral surface of the displacer cover 322, the displacer valve 323 does not move in a proper position on the surface of the displacer cover 322.

The operation of the displacer valve 323 constructed as above will be described below. If a pressure difference takes place between the inside and outside of the displacer cover 322, while the fixed portion 323a and the rotation preventing guide 323b of the displacer valve 323 do not move, the stress is exerted on the connection portion 323e of the displacer valve 323, such that the opening/closing portion 323d of the displacer valve 323 opens or closes the inlet port 322h of the displacer cover 322.

The present invention has been described in detail with reference to the exemplary embodiments and the attached drawings. However, the scope of the present invention is defined by the appended claims.

## Claims

1. A displacer valve assembly for a cryogenic refrigerator, comprising:
a displacer cover (322) having a blocked circular surface and cylindrical lateral surface which is perpendicular to the block circular surface, so as to form a U-shaped section, wherein a hole (322h) through which refrigerant flows from a regenerator and a bolt groove (h) are formed eccentrically from the center of the block circular surface;
a displacer valve (323) comprising a fixed portion (323a) with a bolt hole (H) which is fastened by a bolt to the bolt groove (h), an opening/closing portion (323d) spaced apart from the fixed portion (323a) to open and close the hole (322h) of the displacer cover (322) and a connection portion (323e) smoothly connecting the fixed portion to the opening/closing portion (323d),
**characterised in that**
the displacer valve (323) is formed in a thin-plate shape and further comprises a rotation preventing guide (323b) extended from the fixed portion (323a) and supported on the lateral surface to prevent the displacer valve (323) from rotating around the bolt.

2. The displacer valve assembly of Claim 1, wherein the rotation preventing guide (323b) is more extended in the circumferential direction toward the center of the circular surface than toward the center of the bolt hole (H).

3. The displacer valve assembly of Claim 1, wherein the rotation preventing guide (323b) is formed in a curved-line shape along the lateral surface of the displacer cover (322).

4. The displacer valve assembly of Claim 3, wherein the displacer valve (323) further comprises a cutaway portion (323c) formed by cutting away a part of the fixed portion (323a) in a curved-line shape to maintain an interval between the connection portion (323e) and the rotation preventing guide (323b) and facilitate a movement of the connection portion (323e).

5. A cryogenic refrigerator comprising the displacer valve assembly of any of claims 1 to 4, the cryogenic refrigerator comprising:
a hermetic shell (10);
a piston (31) linearly reciprocated in the axial direction in a cylinder (21) provided in the hermetic shell (10);
a displacer (32) linearly reciprocated in the opposite direction to the piston (31);
a regenerator (50) coupled to the displacer (32) and linearly reciprocated with the displacer (32), in which regenerator refrigerants flowing in opposite directions to each other exchange heat with each other;
a compression space (c) defined and varied between the cylinder (21), the piston (31), and the displacer (32); and
an expansion space (E) defined between the hermetic shell (10) and the regenerator (50) and varied in the opposite manner to the compression space (c),
wherein the displacer (32) comprises a displacer rod (321) inserted into the piston (31) to perform a motion, a displacer body (321 a) extended from the displacer rod (321) and coupled to the regenerator (50), and a displacer cover (322) mounted in the displacer body (321 a), a displacer space is defined between the displacer body (321 a) and the displacer cover (322), the displacer cover (322) comprises a hole (322h) through which the refrigerant flows from the regenerator (50) to the displacer space and the displacer valve (323) fastened to the displacer cover (322) by said bolt to open and close the hole (322h).

## Patentansprüche

1. Verdrängerventilanordnung für eine kryogene Kühlvorrichtung, wobei die Verdrängerventilanordnung aufweist:
eine Verdrängerabdeckung (322), die zur Ausbildung eines U-förmigen Teils eine kreisförmige Abschlussfläche und eine zylindrische Seitenfläche aufweist, die senkrecht zur kreisförmigen Abschlussfläche angeordnet ist, wobei ein Loch (322h), durch das ein Kühlmittel von einem Regenerator strömt, und eine Bolzennut (h) exzentrisch zum Zentrum der kreisförmigen Abschlussfläche ausgebildet sind,
ein Verdrängerventil (323), das einen Befestigungsbereich (323a), der ein Bolzenloch (H) aufweist und mittels eines Bolzens an der Bolzennut (h) befestigt ist, einen zum Befestigungsbereich (323a) beabstandeten Bereich (323d) zum Öffnen und Schließen, um das Loch (322h) der Verdrängerabdeckung (322) zu öffnen und zu schließen, und einen Verbindungsbereich (323e), der den Befestigungsbereich nahtlos mit dem Bereich (323d) zum Öffnen und Schließen verbindet, aufweist,
**dadurch gekennzeichnet, dass**
das Verdrängerventil (323) in Form einer dünnen Platte ausgebildet ist und ferner eine Verdrehsicherung (323b) aufweist, die sich von dem Befestigungsbereich (323a) weg erstreckt und sich an der Seitenfläche abstützt, um zu verhindern, dass sich das Verdrängerventil (323) um den Bolzen dreht.

2. Verdrängerventilanordnung nach Anspruch 1, worin sich die Verdrehsicherung (323b) in Umfangsrichtung mehr in Richtung zum Zentrum der kreisförmigen Fläche als in Richtung zum Bolzenlochzentrum (H) erstreckt.

3. Verdrängerventilanordnung nach Anspruch 1, worin die Verdrehsicherung (323b) mit einer entlang der Seitenfläche der Verdrängerabdeckung (322) gekrümmten Linienform ausgebildet ist.

4. Verdrängerventilanordnung nach Anspruch 3, worin das Verdrängerventil (323) ferner einen Aussparungsbereich (323c) aufweist, der durch ein Entfernen eines Teils des Befestigungsbereichs (323a) in einer gekrümmten Linienform gebildet ist, um zwischen dem Verbindungsbereich (323e) und der Verdrehsicherung (323b) einen Zwischenraum aufrecht zu erhalten und um eine Bewegung des Verbindungsbereichs (323e) zu erleichtern.

5. Kryogene Kühlvorrichtung, die eine Verdrängerventilanordnung nach einem der Ansprüche 1 bis 4 aufweist, wobei die kryogene Kühlvorrichtung aufweist:
ein hermetisches Gehäuse (10),
einen Kolben (31), der sich in einem Zylinder (21) des hermetischen Gehäuses (10) in axialer Richtung hin- und herbewegt,
einen Verdränger (32), der sich in einer zum Kolben (31) entgegengesetzten Richtung linear hin- und herbewegt,
einen Regenerator (50), der mit dem Verdränger (32) verbunden ist und sich mit dem Verdränger (32) linear hin- und herbewegt, wobei in dem Regenerator in einander entgegengesetzte Richtungen strömende Kühlmittel untereinander Wärme austauschen,
ein Verdichterraum (c), der zwischen dem Zylinder (21), dem Kolben (31) und dem Verdränger (32) ausgebildet ist und sich zwischen diesen verändert, und
ein Expansionsraum (E), der zwischen dem hermetischen Gehäuse (10) und dem Regenerator (50) ausgebildet ist und sich in zum Verdichterraum (c) entgegengesetzter Weise verändert, wobei der Verdränger (32) zur Durchführung einer Bewegung eine in den Kolben (31) eingesetzte Verdrängerstange (321), einen sich von der Verdrängerstange (321) aus erstreckenden und mit dem Regenerator (50) verbundenen Verdrängerkörper (321a) und eine in dem Verdrängerkörper (321a) angebrachte Verdrängerabdeckung (322) aufweist, wobei zwischen dem Verdrängerkörper (321a) und der Verdrängerabdeckung (322) ein Verdrängerraum ausgebildet ist, die Verdrängerabdeckung (322) ein Loch (322h) aufweist, durch das das Kühlmittel von dem Regenerator (50) zum Verdrängerraum strömt, und wobei das Verdrängerventil (323) mit dem Bolzen an der Verdrängerabdeckung (322) befestigt ist, um das Loch (322h) zu öffnen und zu verschließen.

## Revendications

1. Ensemble de vanne de piston auxiliaire pour un réfrigérateur cryogénique, comprenant :
un couvercle de piston auxiliaire (322) ayant une surface circulaire bloquée et une surface latérale cylindrique qui est perpendiculaire à la surface perpendiculaire bloquée, afin de former une section en forme de U, dans lequel un trou (322h) à travers lequel le réfrigérant s'écoule depuis un régénérateur et une rainure de boulon (h) sont formés de manière excentrique par rapport au centre de la surface circulaire bloquée ;
une vanne de piston auxiliaire (323) comprenant une partie fixe (323a), avec un trou de boulon (H) qui est fixé par un boulon à la rainure de boulon (h), une partie d'ouverture/fermeture (323d) espacée de la partie fixe (323a) pour ouvrir et fermer le trou (322h) du couvercle de piston auxiliaire (322) et une partie de raccordement (323e) raccordant de manière régulière la partie fixe à la partie d'ouverture/fermeture (323d),
**caractérisé en ce que** :
la vanne de piston auxiliaire (323) est formée selon une forme de plaque fine et comprend en outre un guide anti-rotation (323b) étendu à partir de la partie fixe (323a) et supporté sur la surface latérale pour empêcher la vanne de piston auxiliaire (323) de tourner autour du boulon.

2. Ensemble de vanne de piston auxiliaire selon la revendication 1, dans lequel le guide anti-rotation (323b) est plus étendu dans la direction circonférentielle vers le centre de la surface circulaire que vers le centre du trou de boulon (H).

3. Ensemble de vanne de piston auxiliaire selon la revendication 1, dans lequel le guide anti-rotation (323b) est formé selon une forme de ligne incurvée le long de la surface latérale du couvercle de piston auxiliaire (322).

4. Ensemble de vanne de piston auxiliaire selon la revendication 3, dans lequel la vanne de piston auxiliaire (323) comprend en outre une partie coupée (323c) formée en coupant une partie de la partie fixe (323a) selon une forme de ligne incurvée afin de maintenir un intervalle entre la partie de raccordement (323e) et le guide anti-rotation (323b) et faciliter un mouvement de la partie de raccordement (323e).

5. Réfrigérateur cryogénique comprenant l'ensemble de vanne de piston auxiliaire selon l'une quelconque des revendications 1 à 4, le réfrigérateur cryogénique comprenant :
une coque hermétique (10) ;
un piston (31) effectuant un mouvement de va-et-vient de manière linéaire dans la direction axiale dans un cylindre (21) prévu dans la coque hermétique (10) ;
un piston auxiliaire (32) effectuant un mouvement de va-et-vient de manière linéaire dans la direction opposée au piston (31) ;
un régénérateur (50) couplé au piston auxiliaire (32) et effectuant un mouvement de va-et-vient de manière linéaire avec le piston auxiliaire (32), dans lequel des réfrigérants de régénérateur s'écoulant dans des directions opposées entre elles effectuent un échange de chaleur les uns par rapport aux autres ;
un espace de compression (c) défini et modifié entre le cylindre (21), le piston (31) et le piston auxiliaire (32) ; et
un espace d'expansion (E) défini entre la coque hermétique (10) et le régénérateur (50) et modifié d'une manière opposée à l'espace de compression (c),
dans lequel le piston auxiliaire (32) comprend une tige de piston auxiliaire (321) insérée dans le piston (31) pour réaliser un mouvement, un corps de piston auxiliaire (321a) étendu à partir de la tige de piston auxiliaire (321) et couplé au régénérateur (50), et un couvercle de piston auxiliaire (322) monté dans le corps de piston auxiliaire (321a), un espace de piston auxiliaire est défini entre le corps de piston auxiliaire (321a) et le couvercle de piston auxiliaire (322), le couvercle de piston auxiliaire (322) comprend un trou (322h) à travers lequel le réfrigérant s'écoule à partir du régénérateur (50) jusqu'à l'espace de piston auxiliaire et la vanne de piston auxiliaire (323) fixée au couvercle de piston auxiliaire (322) par ledit boulon pour ouvrir et fermer le trou (322h).
